# EUROPEAN PATENT SPECIFICATION

(11) **EP 3 739 232 B1**
(45) Date of publication and mention of the grant of the patent: **26.10.2022**
(21) Application number: 19738657.6
(22) Date of filing: 09.01.2019
(51) Int. Cl.: F16D 13/56, F16D 13/52, F16D 23/12

(54) **POWER TRANSMISSION DEVICE**
LEISTUNGSÜBERTRAGUNGSVORRICHTUNG
DISPOSITIF DE TRANSMISSION DE PUISSANCE

(30) Priority: 11.01.2018 JP 2018002702
(43) Date of publication of application: 18.11.2020
(73) Proprietor: Kabushiki Kaisha F.C.C., Hamamatsu-shi, Shizuoka 431-1394 (JP)
(72) Inventor: NISHIKAWA, Junichi, Hamamatsu-shi, Shizuoka 431-1304 (JP); YOSHIMOTO, Katsu, Hamamatsu-shi, Shizuoka 431-1304 (JP); CHEN, Han Hiong, Hamamatsu-shi, Shizuoka 431-1304 (JP); OZAWA, Yoshihiko, Hamamatsu-shi, Shizuoka 431-1304 (JP)
(74) Representative: Cohausz & Florack
(86) International application number: PCT/JP2019/000381
(87) International publication number: WO 2019/139044

(56) References cited:
- EP-A1- 3 181 933
- WO-A1-2016/024557
- JP-A- H05 202 963
- JP-A- 2010 053 988
- JP-A- 2011 153 655
- JP-A- 2011 190 885

## Description

### Technical Field

The present invention relates to a power transmission device that is capable of appropriately transmitting or cutting off rotational power of an input member to an output member.

### Background Art

In general, a motorcycle has a power transmission device for appropriately transmitting or cutting off driving power of an engine to a transmission and a driving wheel. The power transmission device includes an input member coupled to the engine side, an output member coupled to the transmission and driving wheel side, a clutch member coupled to an output member, and a pressure member that is capable of pressing clutch plates (drive-side clutch plates and driven-side clutch plates) against each other or releasing a press-contact force. The power transmission device is configured to transmit power by pressing the drive-side clutch plates and the driven-side clutch plates against each other and to cut off power by releasing the press-contact force.

For example, in a power transmission device disclosed in PTL 1, a receiving member is attached to the pressure member, and a clutch spring (urging means) contained in the receiving member urges the pressure member in a direction such that the drive-side clutch plates and driven-side clutch plates are pressed against each other. One cam surface is formed in the receiving member, and the other cam surface, which faces the one cam surface, is formed in the clutch member. These cam surfaces constitute a back-torque limiting cam that reduces the press-contact force between the drive-side clutch plates and the driven-side clutch plates if the pressure member and the clutch member rotate relative to each other when the rotation speed of the output member exceeds the rotation speed of the input member.

That is, if the pressure member and the clutch member rotate relative to each other when the rotation speed of the output member exceeds the rotation speed of the input member, the one cam surface and the other cam surface slide over each other and the back-torque limiting cam functions to move the receiving member in the axial direction relative to the pressure member. Thus, the urging force of the clutch spring applied to the pressure member decreases, so that the press-contact force between the drive-side clutch plates and the driven-side clutch plates is reduced.

Other power transmission devices are known form: JP 2010 053988 A, EP 3 181933 A1 and JP 2011 190885 A.

### Citation List

### Patent Literature

PTL 1: International Publication No. WO2016/024557

### Summary of Invention

### Technical Problem

However, in the existing power transmission device described above, when the entire device including the pressure member and the clutch member rotates at a high speed, the receiving member is pressed against the clutch member, which is positioned radially outside, by a generated centrifugal force, and the sliding resistance of the receiving member may become larger than expected. In this case, when a driver operates a clutch lever or the like to separate the pressure member from the clutch member to disengage the clutch (release the press-contact force between the clutch plates) and subsequently reengages the clutch (to press the clutch plates against each other), movement of the receiving member is slowed due to excessive sliding resistance. Thus, a problem arises in that response when engaging the clutch becomes dull and the driver experiences an unpleasant sensation in operability due to feeling of idle driving.

The present invention has been made against the background described above and provides a power transmission device that can improve responsiveness when engaging a clutch and improve operability by reducing the sliding resistance of a receiving member.

### Solution to Problem

According to an invention described in Claim 1, a power transmission device includes: a clutch housing that rotates together with rotation of an input member and to which a plurality of drive-side clutch plates are attached; a clutch member to which a plurality of driven-side clutch plates that are formed alternately with the drive-side clutch plates of the clutch housing are attached and to which an output member is coupled; a pressure member that is attached to the clutch member and that is capable of pressing the drive-side clutch plates and the driven-side clutch plates against each other or releasing a press-contact force in accordance with movement thereof relative to the clutch member in an axial direction; urging means that urges the pressure member in a direction such that the drive-side clutch plates and the driven-side clutch plates are pressed against each other; a receiving member that is constituted by a separate member attached to the pressure member, that receives an urging force of the urging means on the pressure member side, and that is capable of transmitting the urging force to the pressure member; and a back-torque limiting cam that is constituted by a pair of cam surfaces that reduce a press-contact force between the drive-side clutch plates and the driven-side clutch plates if the pressure member and the clutch member rotate relative to each other when a rotation speed of the output member exceeds a rotation speed of the input member, one of the cam surfaces being formed in the receiving member, the other cam surface being formed in the clutch member. The power transmission device is capable of transmitting or cutting off rotational power input to the input member to the output member by pressing the drive-side clutch plates and the driven-side clutch plates against each other or releasing the press-contact force. The power transmission device includes a radially-outside restricting portion that is capable of restricting radially-outward movement of the receiving member relative to the pressure member and is capable of maintaining a clearance between a side surface of the receiving member and the clutch member.

According to an invention described in Claim 2, in the power transmission device described in Claim 1, the radially-outside restricting portion includes a flange portion formed on an opening side of the receiving member, and a contact portion that is formed in the pressure member and that is capable of restricting the radially-outward movement of the receiving member by making contact with the flange portion.

According to an invention described in Claim 3, in the power transmission device described in Claim 2, the contact portion is constituted by a wall surface extending in a rotation axis direction of the pressure member and is capable of conformably making contact with a side surface of the flange portion.

According to an invention described in Claim 4, in the power transmission device described in Claim 3, the contact portion has a shape conforming to an outer peripheral shape of the flange portion in plan view.

According to an invention described in Claim 5, in the power transmission device described in Claim 1, an attachment hole for attaching the receiving member is formed in the pressure member, and the radially-outside restricting portion is constituted by a radially-outside opening of the attachment hole and is capable of restricting the radially-outward movement by making contact with the receiving member.

According to an invention described in Claim 6, in the power transmission device described in Claim 5, the receiving member has a contact surface having a shape conforming to the radially-outside opening of the attachment hole, and the contact surface is capable of conformably making contact with the radially-outside opening.

### Advantageous Effects of Invention

With the invention described in Claim 1, because the power transmission device has the radially-outside restricting portion that can restrict radially-outward movement of the receiving member relative to the pressure member and can maintain the clearance between the side surface of the receiving member and the clutch member, it is possible to improve responsiveness when engaging the clutch and to improve operability by reducing the sliding resistance of the receiving member.

With the invention described in Claim 2, because the radially-outside restricting portion includes the flange portion formed on the opening side of the receiving member and the contact portion that is formed in the pressure member and that is capable of restricting radially-outward movement of the receiving member by making contact with the flange portion, it is possible to restrict the radially-outward movement by using the flange portion of the receiving member, and it is possible to reliably reduce the sliding resistance of the receiving member.

With the invention described in Claim 3, because the contact portion is constituted by the wall surface extending in the rotation axis direction of the pressure member and is capable of conformably making contact with the side surface of the flange portion, it is possible to cause the flange portion to make contact with the contact portion stably, and it is possible to more reliably reduce the sliding resistance of the receiving member.

With the invention described in Claim 4, because the contact portion has a shape conforming to the outer peripheral shape of the flange portion in plan view, it is possible to cause the flange portion to make contact with the contact portion more stably, and it is possible to further reliably reduce the sliding resistance of the receiving member.

With the invention described in Claim 5, because the attachment hole for attaching the receiving member is formed in the pressure member and the radially-outside restricting portion is constituted by the radially-outside opening of the attachment hole and is capable of restricting the radially-outward movement by making contact with the receiving member, it is possible to restrict radially-outward movement of the receiving member by using the radially-outside opening of the attachment hole, and it is possible to reliably reduce the sliding resistance of the receiving member.

With the invention described in Claim 6, because the receiving member has the contact surface conforming to the radially-outside opening of the attachment hole and the contact surface is capable of conformably making contact with the radially-outside opening, it is possible to cause the receiving member to stably make contact with the radially-outside opening, and it is possible to more reliably reduce the sliding resistance of the receiving member.

### Brief Description of Drawings

[Fig. 1] Fig. 1 is an overall longitudinal sectional view of a power transmission device according to a first embodiment of the present invention.
[Fig. 2] Fig. 2 is a perspective view of the power transmission device in a state in which a clutch housing and the like are removed.
[Fig. 3] Fig. 3 is a plan view of the power transmission device in a state in which the clutch housing and the like are removed.
[Fig. 4] Fig. 4 is a cutaway view taken along line IV-IV in Fig. 3.
[Fig. 5] Fig. 5 is a perspective view of a clutch member of the power transmission device.
[Fig. 6] Fig. 6 is a plan view of the clutch member.
[Fig. 7] Fig. 7 is a rear view of the clutch member.
[Fig. 8] Fig. 8 is a perspective view of a pressure member of the power transmission device as seen from one side.
[Fig. 9] Fig. 9 is a perspective view of the pressure member as seen from the other side.
[Fig. 10] Fig. 10 is a back view of the pressure member.
[Fig. 11] Fig. 11 is a plan view of the pressure member.
[Fig. 12] Fig. 12 is a perspective view of a receiving member of the power transmission device as seen from one side.
[Fig. 13] Fig. 13 is a perspective view of the receiving member as seen from the other side.
[Fig. 14] Fig. 14 shows a plan view and a rear view of the receiving member.
[Fig. 15] Fig. 15 is a sectional view taken along line XV-XV in Fig. 14.
[Fig. 16] Fig. 16 is a developed view illustrating cam surfaces of the power transmission device.
[Fig. 17] Fig. 17 is a sectional view, taken along line XVII-XVII in Fig. 1, illustrating a radially-outside restricting portion of the power transmission device.
[Fig. 18] Fig. 18 is an overall longitudinal sectional view of a power transmission device according to a second embodiment of the present invention.
[Fig. 19] Fig. 19 is a perspective view of a pressure member of the power transmission device as seen from one side.
[Fig. 20] Fig. 20 is a perspective view of the pressure member as seen from the other side.
[Fig. 21] Fig. 21 is a back view of the pressure member.
[Fig. 22] Fig. 22 is a plan view of the pressure member.
[Fig. 23] Fig. 23 shows a plan view and a rear view of a receiving member of the power transmission device.
[Fig. 24] Fig. 24 is a sectional view taken along line XXIV-XXIV in Fig. 23.
[Fig. 25] Fig. 25 is a sectional view, taken along line XXV-XXV in Fig. 18, illustrating a radially-outside restricting portion of the power transmission device.
[Fig. 26] Fig. 26 is a partially cutaway view of a power transmission device according to another embodiment of the present invention.
[Fig. 27] Fig. 27 is a developed view illustrating cam surfaces of the power transmission device.

### Description of Embodiments

Hereafter, embodiments of the present invention will be described in detail with reference to the drawings.

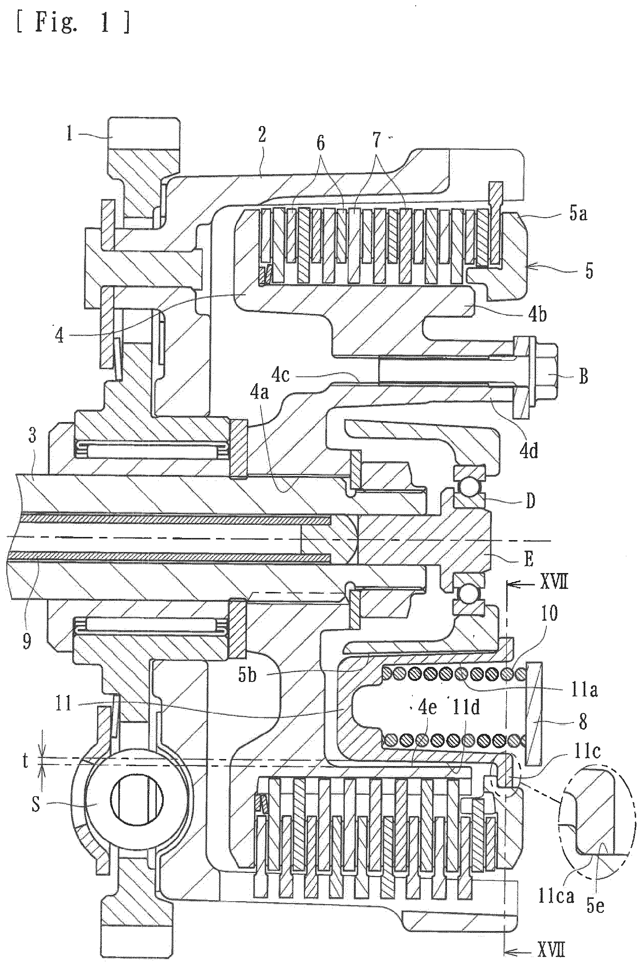

A power transmission device according to the present embodiment is disposed in a vehicle, such as a motorcycle, and appropriately transmits or cuts off driving power of an engine to the transmission and driving wheel side. As illustrated in Fig. 1, the power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. In the figure, the symbol S represents a damper, and the symbol D represents a ball bearing.

The gear 1 can rotate around the shaft 3 when driving power (rotational power) transmitted from the engine is input. The gear 1 is coupled to the clutch housing 2 by using rivets and the like. The clutch housing 2 is constituted by a cylindrical case member whose right end side in the figure is open. A plurality of drive-side clutch plates 6 are attached to the inner peripheral wall of the clutch housing 2. Each of the drive-side clutch plates 6 is constituted by a substantially annular plate, is fitted into a spline formed in the inner peripheral surface of the clutch housing 2, and thus is configured to be rotatable together with rotation of the clutch housing 2 and slidable in the axial direction (left-right directions in Fig. 1).

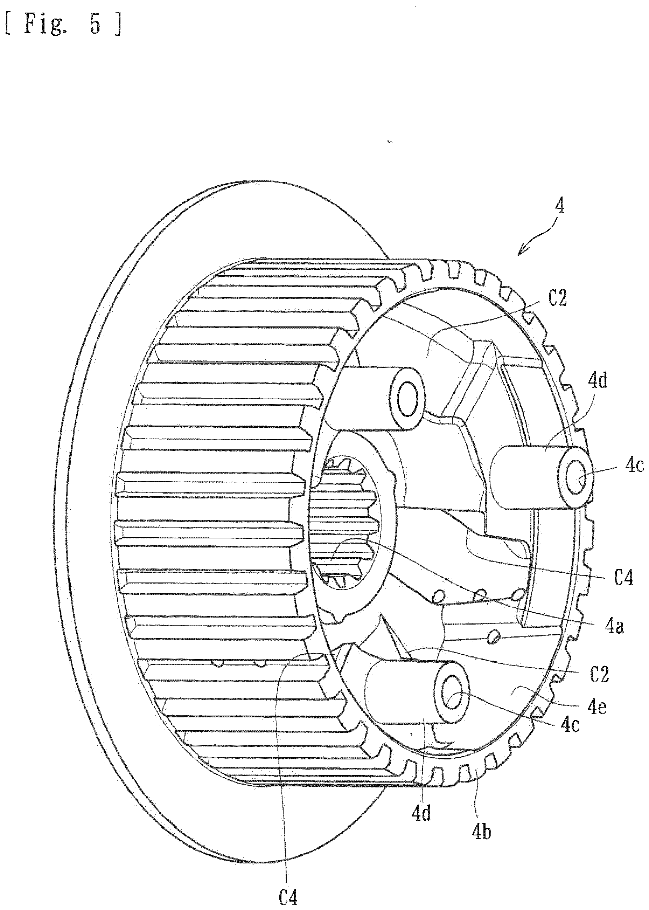

The clutch member 4 is constituted by members disposed in the clutch housing 2. As illustrated in Figs. 5 to 7, the clutch member 4 includes a central hole 4a through which the shaft 3 can be inserted, an outer peripheral wall 4b in which splines are formed, bolt holes 4c through which bolts B can be inserted, boss portions 4d in which the bolt holes 4c are formed, and an inner peripheral surface 4e of the outer peripheral wall 4b. Splines are formed in each of the inner peripheral surface of the central hole 4a and the outer peripheral surface of the shaft 3. The shaft 3 is spline-fitted and coupled to the central hole 4a, so that the shaft 3 also rotates when the clutch member 4 rotates. The driven-side clutch plates 7 are fitted and attached to the splines formed in the outer peripheral wall 4b.

To be more specific, the splines, which are formed in the outer peripheral wall 4b of the clutch member 4, are composed of protrusions and recesses that are integrally formed around substantially the entire periphery of the outer peripheral wall 4b. Because the driven-side clutch plates 7 engage with recessed grooves of the splines, movement of the driven-side clutch plates 7 in the rotational direction is restricted while movement of the driven-side clutch plates 7 relative to the clutch member 4 in the axial direction is allowed, and the driven-side clutch plates 7 can rotate together with the clutch member 4.

The driven-side clutch plates 7 are formed so as to be stacked alternately with the drive-side clutch plates 6. The drive-side clutch plates 6 and the driven-side clutch plates 7 that are adjacent to each other can be pressed against each other or the press-contact force can be released. That is, the drive-side clutch plates 6 and the driven-side clutch plates 7 are allowed to slide in the axial direction of the clutch member 4. When pressed by the pressure member 5 in the leftward direction in Fig. 1, the drive-side clutch plates 6 and the driven-side clutch plates 7 are pressed against each other, so that the rotational power of the clutch housing 2 can be transmitted to the shaft 3 via the clutch member 4. When pressing by the pressure member 5 is relieved, the press-contact force is released, the clutch member 4 stops following the rotation of the clutch housing 2 and stops, so that rotational power is not transmitted to the shaft 3.

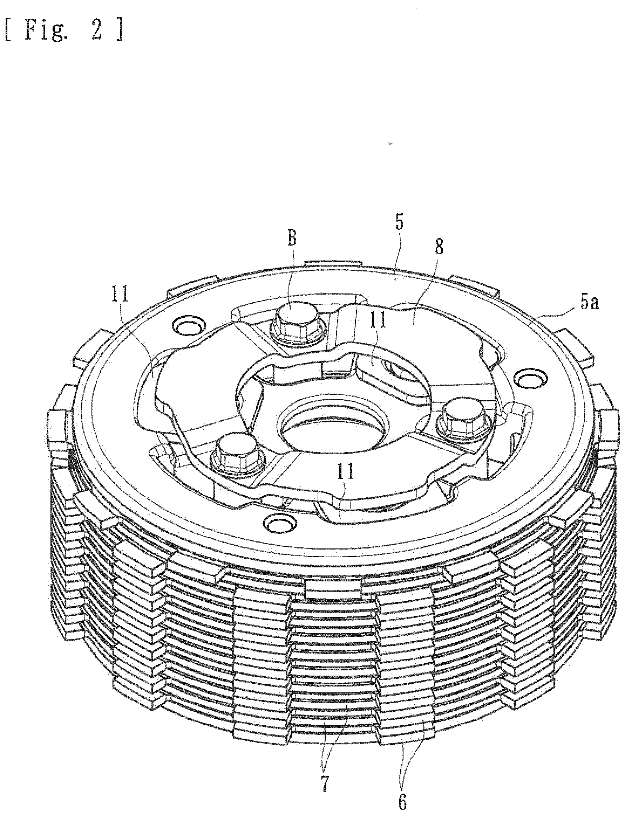

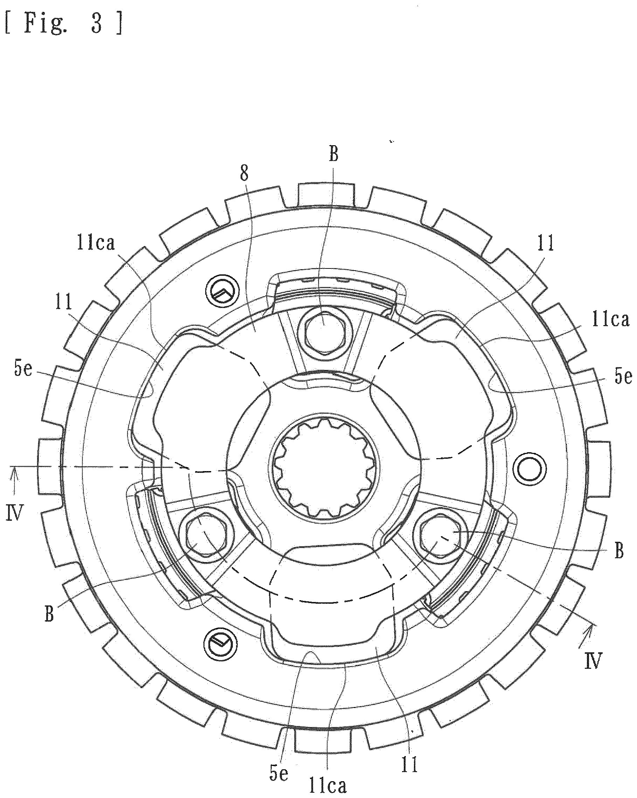

Moreover, as illustrated in Figs. 2 to 4, the fixing member 8 is fixed to the tip- end side of the boss portions 4d by using the bolts B, which are inserted through the bolt holes 4c. The clutch springs 10 as urging means are attached to the fixing member 8. To be specific, the fixing member 8 is constituted by an annular metal member, is fixed to the tip ends of the boss portions 4d by using the bolts B, and is mounted in such a way that the receiving members 11 are positioned between the bolts B and the other end portions of the clutch springs 10 are in contact therewith.

Each of the clutch spring 10 is constituted by a coil spring that is mounted in such a way that, in a state of being contained in the receiving member 11, one end thereof is in contact with the bottom surface side of the receiving member 11 (to be specific, a receiving portion 11b described below) and the other end thereof is in contact with the fixing member 8. The clutch spring 10 can constantly urge the pressure member 5 in a direction such that the drive-side clutch plates 6 and the driven-side clutch plates 7 are pressed against each other (that is, a direction such that the pressure member 5 becomes closer to the clutch member 4). Another urging means may be used as the clutch spring 10.

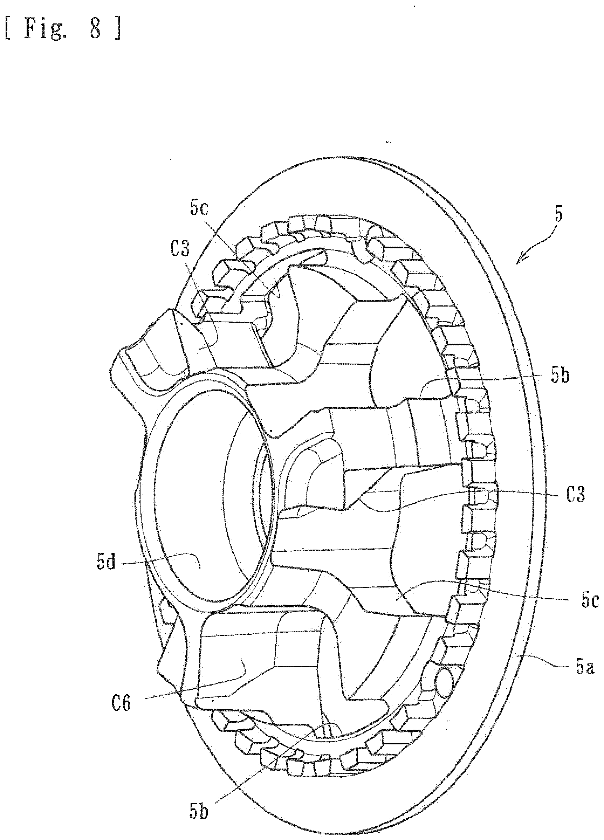

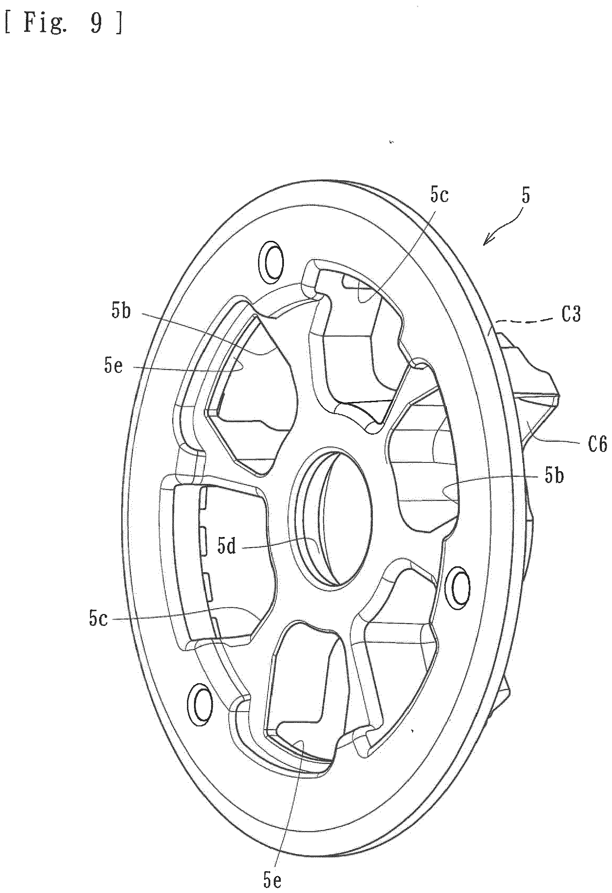

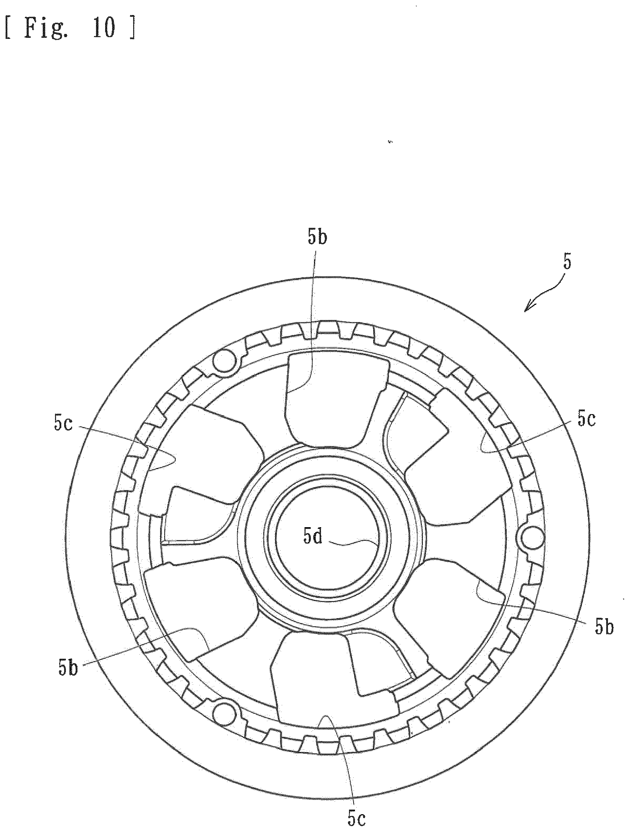

The pressure member 5 is attached to the clutch member 4 at a position on the right end side in Fig. 1 in such a way that the pressure member 5 is movable in the axial direction of the clutch member 4 (left-right directions in Fig. 1). The pressure member 5 can press the drive-side clutch plates 6 and the driven-side clutch plates 7 against each other or release the press-contact force in accordance with movement thereof relative to the clutch member 4 in the axial direction. To be more specific, as illustrated in Figs. 8 to 11, the pressure member 5 includes a flange portion 5a that can press the drive-side clutch plates 6 and the driven-side clutch plates 7 against each other, attachment holes 5b for attaching the receiving members 11, through-holes 5c, a central hole 5d, and contact portions 5e.

Among these, to the central hole 5d of the pressure member 5, a pressed member E is attached via the ball bearing D as illustrated in Fig. 1. The pressed member E is attached to the tip end side of the shaft 3 and is movable so as to follow the push rod 9. When a driver operates operation means, such as a clutch lever or the like (not shown), to cause the push rod 9 to protrude in the rightward direction in the figure, the pressed member E moves in the same direction. Thus, the pressure member 5 can be moved in the rightward direction in Fig. 1 (direction away from the clutch member 4) against the urging forces of the clutch springs 10.

When the pressure member 5 moves in the rightward direction, the press-contact force between the drive-side clutch plates 6 and the driven-side clutch plates 7 is released, and rotational power input to the gear 1 and the clutch housing 2 is cut off and not transmitted to the clutch member 4 and the shaft 3 (clutch is disengaged). When the driver stops operating the operation means, the pressure member 5 moves in the leftward direction in Fig. 1 due to the urging forces of the clutch springs 10, and the drive-side clutch plates 6 and the driven-side clutch plates 7 are pressed against each other. Thus, rotational power input to the gear 1 and the clutch housing 2 is transmitted to the clutch member 4 and the shaft 3 (clutch is engaged). That is, the pressure member 5 is configured to be capable of pressing the drive-side clutch plates 6 and the driven-side clutch plates 7 against each other or releasing the press-contact force in accordance with movement thereof relative to the clutch member 4 in the axial direction.

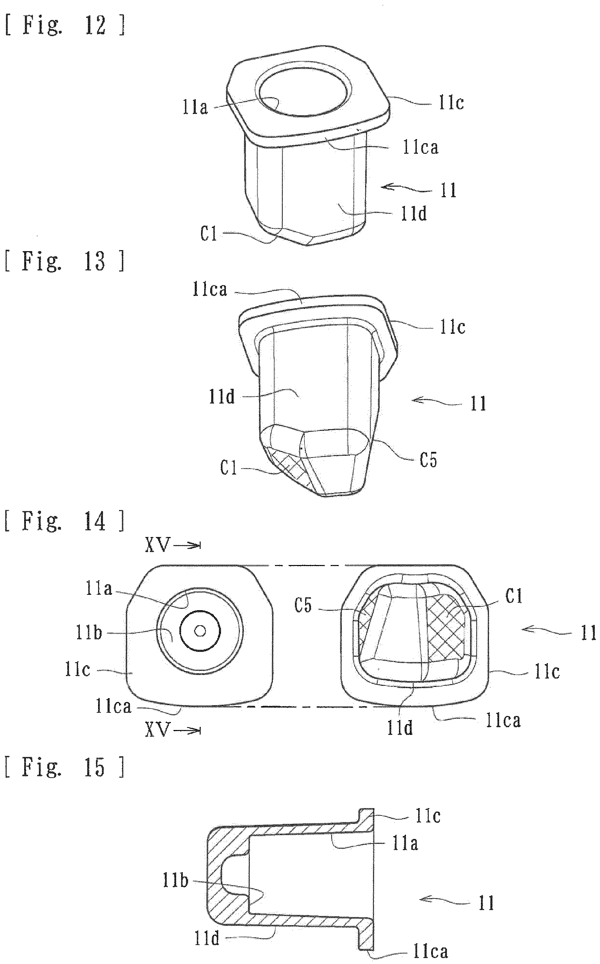

Moreover, the attachment holes 5b are formed in the pressure member 5 at a plurality of (three) positions on the same circle at regular intervals, and the receiving member 11 is attached to each of the attachment holes 5b. The receiving member 11, which is attached to the attachment hole 5b of the pressure member 5, can make contact with one end of the clutch spring 10 and receive the urging force thereof, and is separate from the pressure member 5. To be specific, as illustrated in Figs. 12 to 15, the receiving member 11 according to the present embodiment is constituted by a cup-shaped member that includes: a recessed portion 11a that contains the clutch spring 10, the receiving portion 11b that is formed in the recessed portion 11a and that makes contact with one end portion of the clutch spring 10 and receives the urging force, a flange portion 11c that makes contact with the pressure member 5 and that can transmit the urging force of the clutch spring 10 to the pressure member 5, and a side surface 11d.

Among these, the flange portion 11c is formed on the opening side of the receiving member 11. When the receiving member 11 is attached to the attachment hole 5b, the flange portion 11c makes contact with the opening edge of the attachment hole 5b. After attaching the receiving member 11 to the attachment hole 5b, by mounting the clutch spring 10 into the recessed portion 11a in such a way that one end portion thereof is in contact with the receiving portion 11b, the urging force of the clutch spring 10 is transmitted to the pressure member 5 side via the flange portion 11c of the receiving members 11, and the drive-side clutch plates 6 and the driven-side clutch plates 7 can be pressed against each other by using the transmitted urging force.

Moreover, the power transmission device according to the present embodiment includes: a press-contact assisting cam that can increase the press-contact force between the drive-side clutch plates 6 and the driven-side clutch plates 7 if the pressure member 5 and the clutch member 4 rotate relative to each other when rotational power input to the gear 1 as an input member becomes capable of being transmitted to the shaft 3 as an output member; and a back-torque limiting cam that reduces the press-contact force between the drive-side clutch plates 6 and the driven-side clutch plates 7 if the pressure member 5 and the clutch member 4 rotate relative to each other when the rotation speed of the shaft 3 as an output member exceeds the rotation speed of the gear 1 as an input member. Cam surfaces (first to sixth cam surfaces C1 to C6) that constitute the press-contact assisting cam and the back-torque limiting cam are shown by shading (cross-hatching) in the figures.

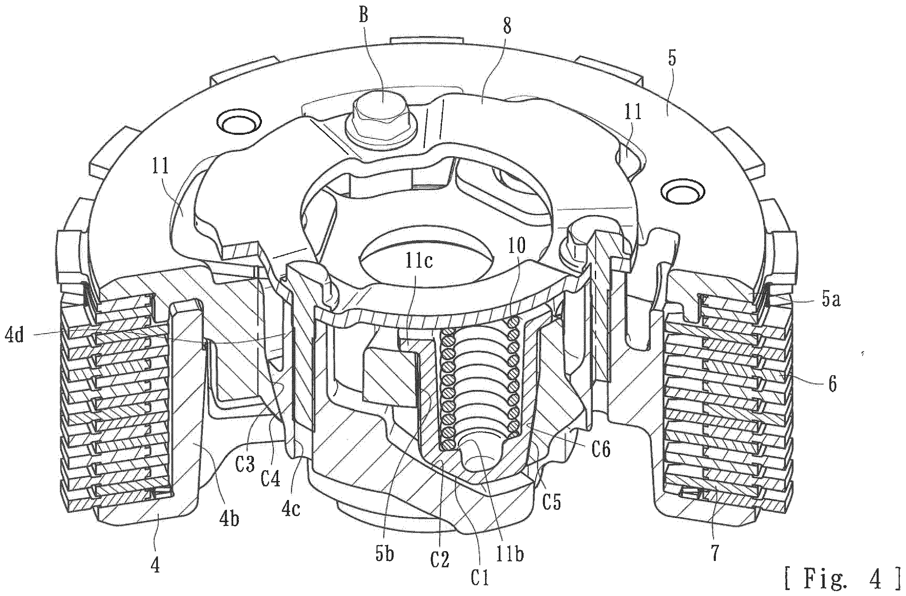

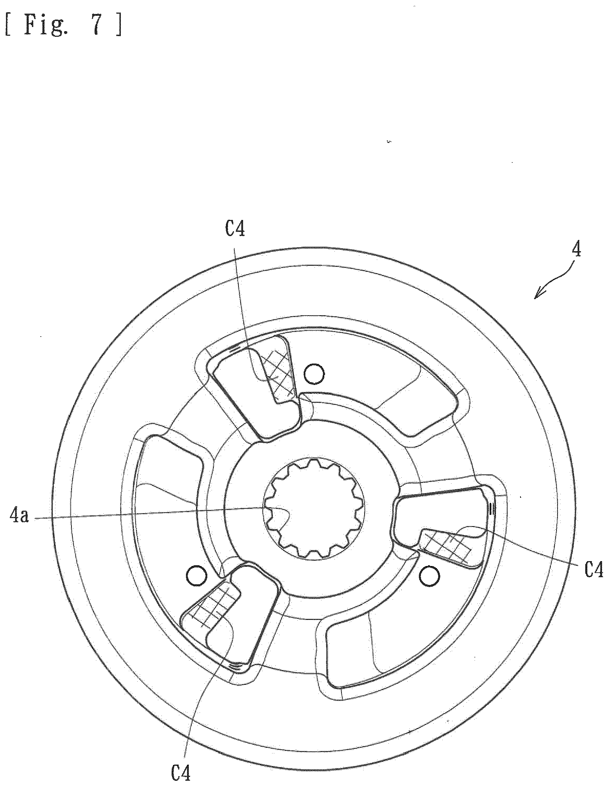

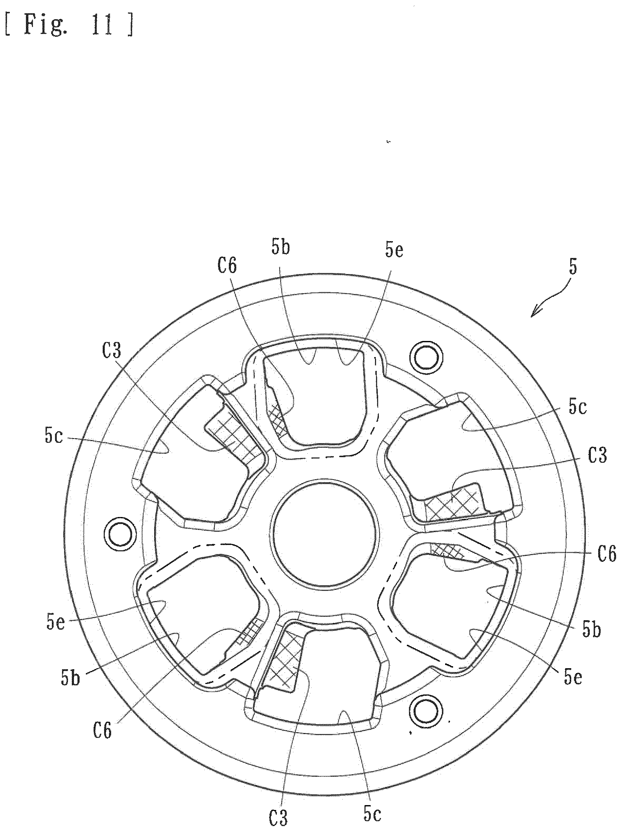

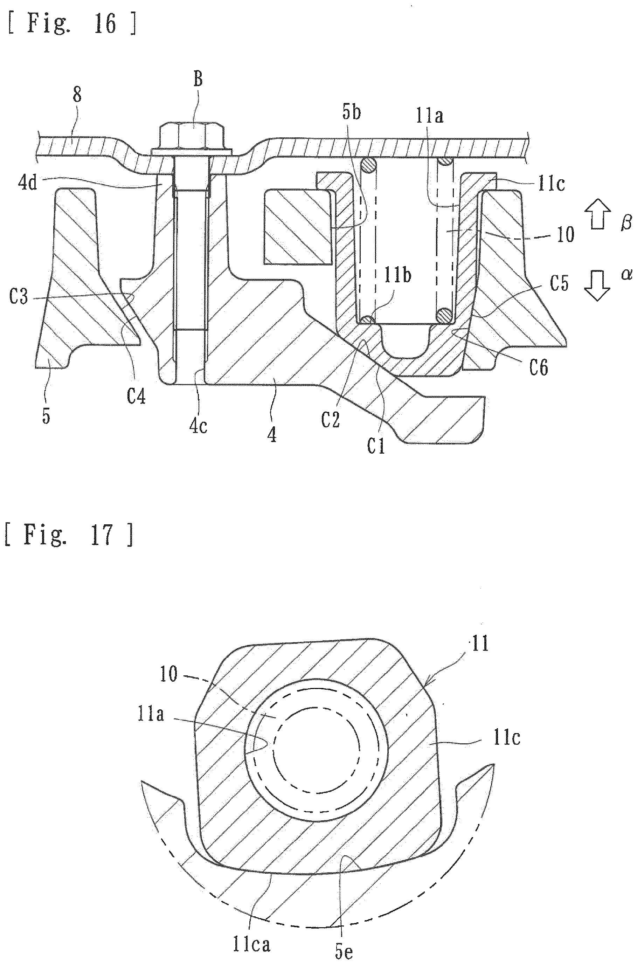

As illustrated in Figs. 4 and 16, the press-contact assisting cam according to the present embodiment is configured by disposing the third cam surfaces C3 and the fourth cam surfaces C4, which are respectively formed in the pressure member 5 and the clutch member 4, so as to face each other. That is, when assembling the clutch member 4 and the pressure member 5 together, the third cam surfaces C3 (see Fig. 11) formed in the pressure member 5 and the fourth cam surfaces C4 (see Fig. 7) formed in the clutch member 4 are disposed so as to face each other. Thus, if the pressure member 5 and the clutch member 4 rotate relative to each other when rotational power input to the gear 1 becomes capable of being transmitted to the shaft 3, the pressure member 5 is moved in the direction α in Fig. 16 by the cam function of the third cam surfaces C3 and the fourth cam surfaces C4 so that the pressure member 5 becomes closer to the clutch member 4, and thereby the press-contact force between the drive-side clutch plates 6 and the driven-side clutch plates 7 is increased.

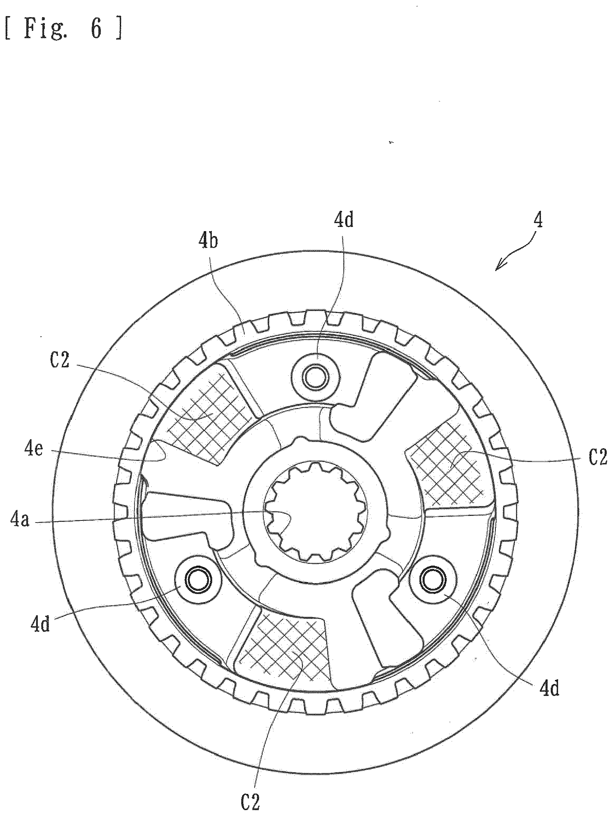

As illustrated in Figs. 4 and 16, the back-torque limiting cam according to the present embodiment is configured by disposing the first cam surfaces C1 and the second cam surfaces C2, which are respectively formed in the receiving members 11 and the clutch member 4, so as to face each other. That is, when assembling the clutch member 4, the pressure member 5, and the receiving members 11 together, the first cam surfaces C1 (see Figs. 13 and 14) formed in the bottom side surfaces of the receiving members 11 and the second cam surfaces C2 (see Fig. 6) formed in the clutch member 4 are disposed so as to face each other. Thus, if the pressure member 5 and the clutch member 4 rotate relative to each other when the rotation speed of the shaft 3 exceeds the rotation speed of the gear 1, the receiving members 11 are moved in the direction β in Fig. 16 by the cam function of the first cam surfaces C1 and the second cam surfaces C2 so as to reduce the urging force of the clutch springs 10 transmitted to the pressure member 5, and thereby the press-contact force between the drive-side clutch plates 6 and the driven-side clutch plates 7 is reduced. Reduction of the press-contact force refers to a state in which rotational-power transmitting capacity is reduced due to sliding of the drive-side clutch plates 6 and the driven-side clutch plates 7 over each other.

Moreover, as illustrated in Fig. 14, in each of the receiving members 11 according to the present embodiment, the fifth cam surface C5 is formed on a side opposite from the first cam surface C1; and the sixth cam surfaces C6 (see Fig. 11), each of which faces the fifth cam surface C5, is formed in the pressure member 5. That is, in both side surfaces of the bottom portion of each of the receiving members 11, the first cam surface C1 and the fifth cam surface C5 are respectively formed; and the back-torque limiting cam is constituted by the first cam surfaces C1, the second cam surfaces C2, the fifth cam surfaces C5, and the sixth cam surfaces C6.

When assembling the clutch member 4, the pressure member 5, and the receiving members 11 together, the first cam surfaces C1 formed in the receiving members 11 and the second cam surfaces C2 formed in the clutch member 4 are disposed so as to face each other, and the fifth cam surfaces C5 formed in the receiving members 11 and the sixth cam surfaces C6 formed in the pressure member 5 are disposed so as to face each other. Thus, if the pressure member 5 and the clutch member 4 rotate relative to each other when the rotation speed of the shaft 3 exceeds the rotation speed of the gear 1, the receiving members 11 are moved in the direction β in Fig. 16 by the cam function of the first cam surfaces C1 and the second cam surfaces C2 and the cam function of the fifth cam surfaces C5 and the sixth cam surfaces C6, and thereby the press-contact force between the drive-side clutch plates 6 and the driven-side clutch plates 7 is reduced.

Thus, when the back-torque limiting cam functions, the receiving members 11 receive both of the cam function of the first cam surfaces C1 and the second cam surfaces C2 and the cam function of the fifth cam surfaces C5 and the sixth cam surfaces C6. Although the back-torque limiting cam according to the present embodiment includes the fifth cam surfaces C5 and the sixth cam surfaces C6, in addition to the first cam surfaces C1 and the second cam surfaces C2, the back-torque limiting cam may have only the first cam surfaces C1 and the second cam surfaces C2.

Here, the power transmission device according to the present embodiment includes a radially-outside restricting portion that can restrict radially-outward movement of the receiving member 11 relative to the pressure member 5 (in a direction outward from the rotational center of the pressure member 5) and that can maintain the clearance t (see Fig. 1) between the side surface 11d of the receiving members 11 and the inner peripheral surface 4e of the clutch member 4. To be specific, as illustrated in Figs. 1 and 17, the radially-outside restricting portion according to the present embodiment is composed of: the flange portion 11c formed on the opening side of each of the receiving members 11; and the contact portion 5e that is formed in the pressure member 5 and that can restrict radially-outward movement of the receiving member 11 by making contact with the flange portion 11c.

That is, in a state in which the receiving member 11 is attached to the attachment hole 5b, the contact portion 5e is formed at a position radially outside of the flange portion 11c of the receiving member 11. When the pressure member 5 and the like rotate at a high speed and the receiving member 11 receives a radially-outward centrifugal force, the flange portion 11c makes contact with the contact portion 5e and resists the centrifugal force. Therefore, it is possible to avoid radially-outward movement of the receiving member 11 and to maintain the clearance t (gap) between the side surface 11d of the receiving member 11 and the inner peripheral surface 4e of the clutch member 4.

The contact portion 5e according to the present embodiment is integrally formed on the radially outer side of the attachment hole 5b of the pressure member 5, is constituted by a wall surface extending in the rotation axis direction of the pressure member 5 (left-right directions in Fig. 1), and is capable of conformably making contact with a radially-outer side surface 11ca (outer peripheral end surface) of the flange portion 11c of the receiving member 11. Moreover, as illustrated in Fig. 17, the contact portion 5e according to the present embodiment has a shape conforming to the outer shape of the flange portion 11c in plan view, and the radially-outer side surface 11ca of the flange portion 11c can make contact with substantially the entire area of the contact portion 5e.

The present embodiment includes the radially-outside restricting portion that can restrict radially-outward movement of the receiving member 11 relative to the pressure member 5 and that can maintain the clearance t between the side surface 11d of the receiving member 11 and the clutch member 4. Therefore, with the present embodiment, it is possible to prevent the receiving member 11 from sliding over the inner peripheral surface 4e of the clutch member 4, and it is possible to improve responsiveness when engaging the clutch and to improve operability by reducing the sliding resistance of the receiving member 11.

Moreover, the radially-outside restricting portion according to the present embodiment includes the flange portion 11c formed on the opening side of the receiving member 11, and the contact portion 5e that is formed in the pressure member 5 and that can restrict radially-outward movement of the receiving member 11 by making contact with the flange portion 11c. Thus, it is possible to restrict the radially-outward movement by using the flange portion 11c of the receiving member 11, and it is possible to reliably reduce the sliding resistance of the receiving member 11.

Moreover, the contact portion 5e according to the present embodiment is constituted by the wall surface extending in the rotation axis direction of the pressure member 5 and is capable of conformably making contact with the side surface 11ca of the flange portion 11c. Thus, it is possible to cause the flange portion 11c to make contact with the contact portion 5e stably, and it is possible to more reliably reduce the sliding resistance of the receiving member 11. Furthermore, the contact portion 5e according to the present embodiment has a shape conforming to the outer shape of the flange portion 11c in plan view. Thus, it is possible to cause the flange portion 11c to make contact with the contact portion 5e stably, and it is possible to further reliably reduce the sliding resistance of the receiving member 11.

Next, a power transmission device according to a second embodiment of the present invention will be described.

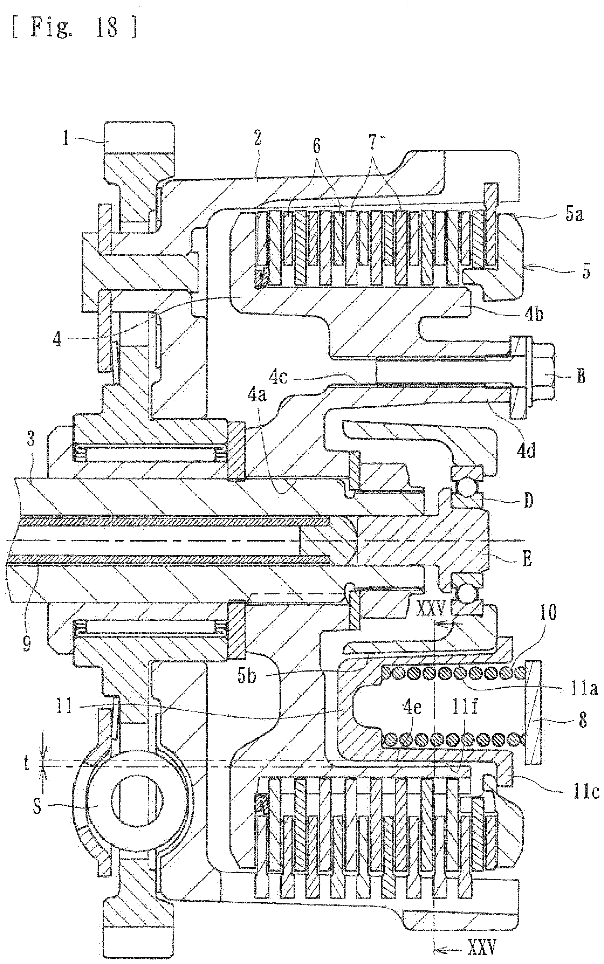

As with the first embodiment, a power transmission device according to the present embodiment is disposed in a vehicle, such as a motorcycle, and appropriately transmits or cuts off driving power of an engine to the transmission and driving wheel side. As illustrated in Fig. 18, the power transmission device is mainly composed of: a clutch housing 2 on which a gear 1 as an input member is formed, a clutch member 4 coupled to a shaft 3 as an output member, a pressure member 5 formed on the right-end side of the clutch member 4 in the figure, drive-side clutch plates 6 coupled to the clutch housing 2 side, driven-side clutch plates 7 coupled to the clutch member 4 side, a fixing member 8, a push rod 9, clutch springs 10 as urging means, and receiving members 11. Elements that are the same as those of the first embodiment will be denoted by the same numerals, and detailed descriptions of such elements will be omitted.

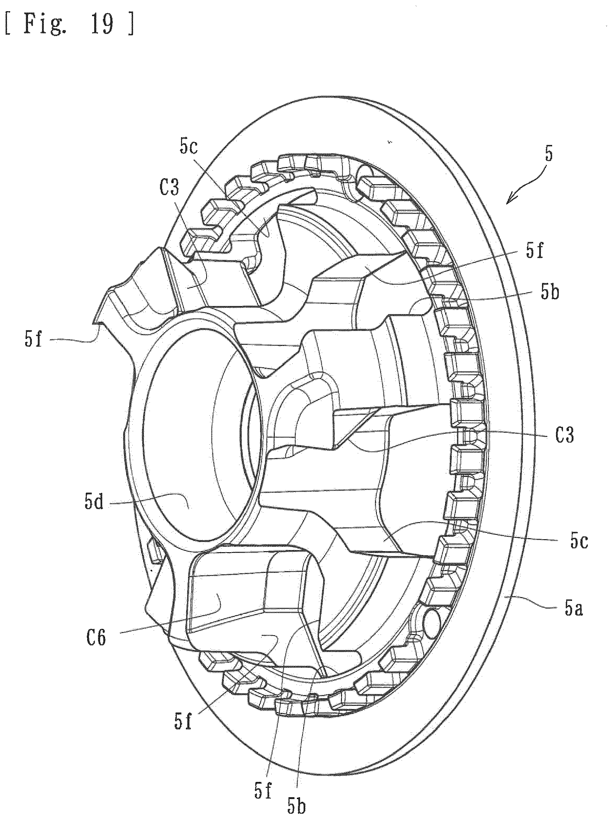

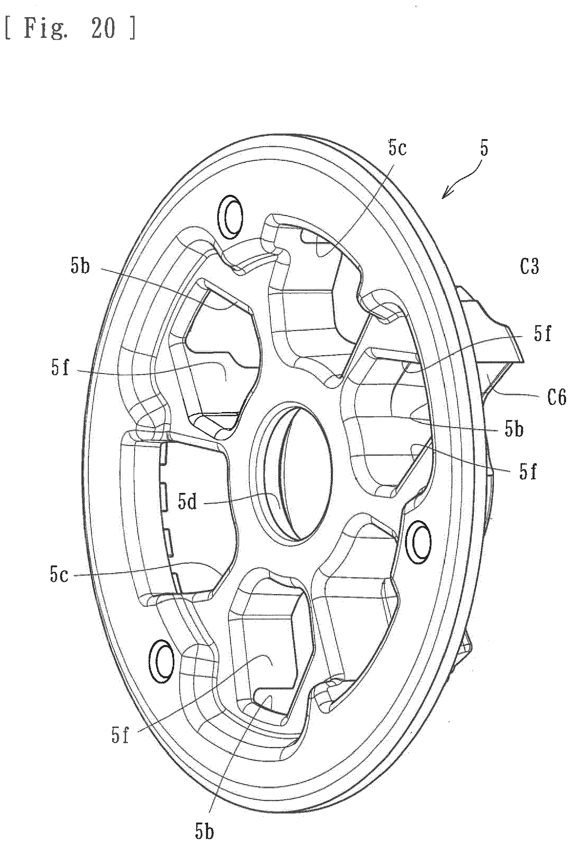

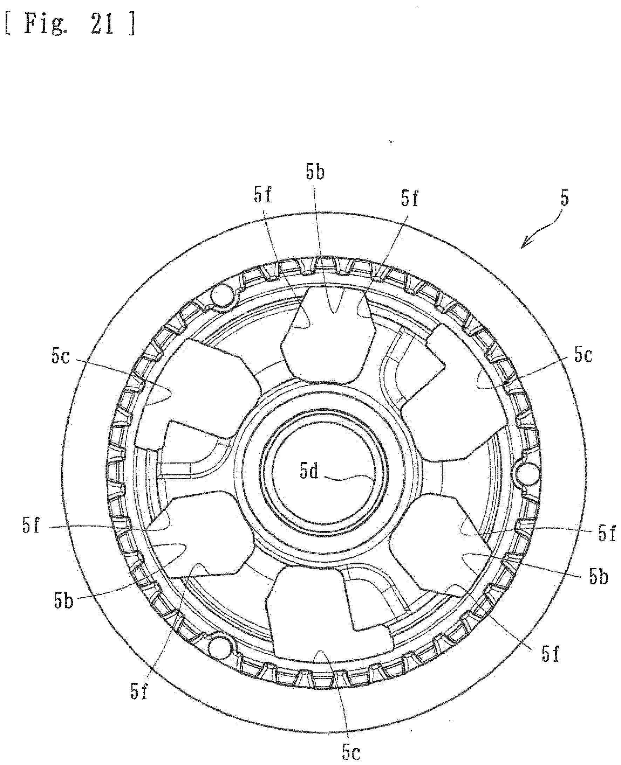

The pressure member 5 is attached to the clutch member 4 at a position on the right end side in Fig. 18 in such a way that the pressure member 5 is movable in the axial direction of the clutch member 4 (left-right directions in Fig. 18). The pressure member 5 can press the drive-side clutch plates 6 and the driven-side clutch plates 7 against each other or release the press-contact force in accordance with movement thereof relative to the clutch member 4 in the axial direction. To be more specific, as illustrated in Figs. 19 to 22, the pressure member 5 according to the present embodiment includes a flange portion 5a that can press the drive-side clutch plates 6 and the driven-side clutch plates 7 against each other, attachment holes 5b for attaching the receiving members 11, through-holes 5c, and a central hole 5d.

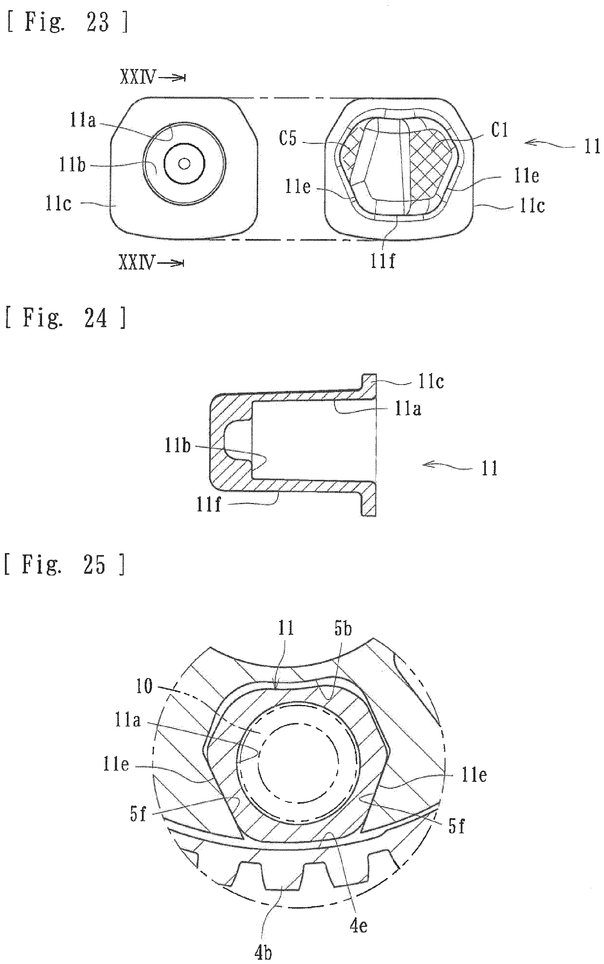

The receiving member 11 is attached to the attachment hole 5b of the pressure member 5, can make contact with one end of the clutch spring 10 and receive the urging force thereof, and is separate from the pressure member 5. To be specific, as illustrated in Figs. 23 and 24, the receiving member 11 according to the present embodiment is constituted by a cup-shaped member that includes: a recessed portion 11a that contains the clutch spring 10, the receiving portion 11b that is formed in the recessed portion 11a and that makes contact with one end portion of the clutch spring 10 and receives an urging force, a flange portion 11c that makes contact with the pressure member 5 and that can transmit the urging force of the clutch spring 10 to the pressure member 5, and a contact surface 11e and a radially-outer side surface 11f that constitute the outer peripheral surface of the receiving member 11.

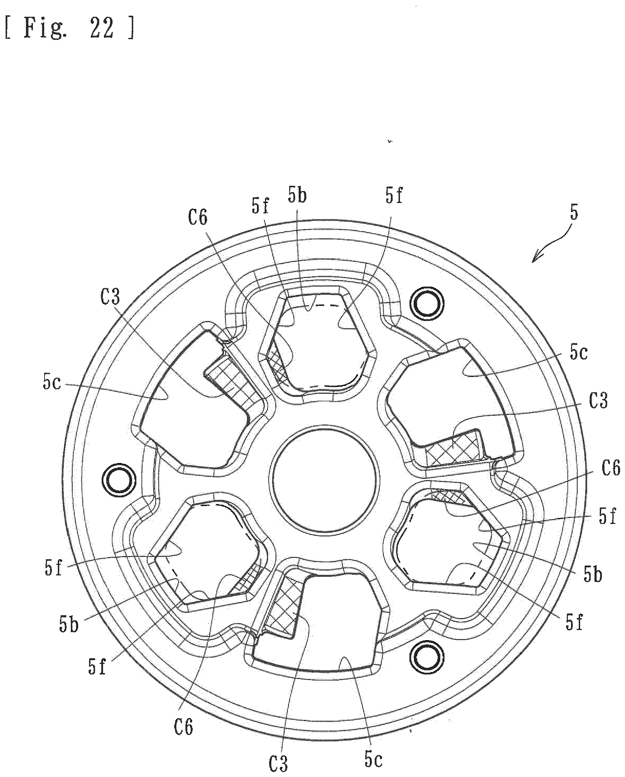

Here, the power transmission device according to the present embodiment includes a radially-outside restricting portion that can restrict radially-outward movement of the receiving member 11 relative to the pressure member 5 (in a direction outward from the rotational center of the pressure member 5) and that can maintain the clearance t (see Fig. 18) between the side surface 11d of the receiving members 11 and the inner peripheral surface 4e of the clutch member 4. To be specific, as illustrated in Figs. 22 and 25, the radially-outside restricting portion according to the present embodiment is constituted by a radially-outside opening 5f of the attachment hole 5b of the pressure member 5 and is configured to be capable of restricting radially-outward movement by making contact with the receiving member 11.

The radially-outside opening 5f is constituted by a part whose opening dimension is smaller than the width of the receiving member 11 and is capable of conforming to the contact surface 11e of the receiving member 11. That is, in a state in which the receiving member 11 is attached to the attachment hole 5b, the contact surface 11e of the receiving member 11 is capable of conformably making contact with the radially-outside opening 5f of the attachment hole 5b. When the pressure member 5 and the like rotate at a high speed and the receiving member 11 receives a radially-outward centrifugal force, the contact surface 11e makes contact with the radially-outside opening 5f and resists the centrifugal force. Therefore, it is possible to avoid radially-outward movement of the receiving member 11 and to maintain the clearance t (gap) between the radially-outer side surface 11f of the receiving member 11 and the inner peripheral surface 4e of the clutch member 4.

The contact surface 11e of the receiving member 11 according to the present embodiment has a shape conforming to the radially-outside opening 5f of the attachment hole 5b, and the contact surface 11e is configured to be capable of conformably making contact with the radially-outside opening 5f. To be specific, the contact surface 11e is constituted by two surfaces in two directions, between which the radially-outer side surface 11f is interposed, and the contact surface 11e is configured to conformably make contact with the opening 5f, and, in a state in which the contact surface 11e and the opening 5f are in contact with each other, it is possible to maintain the clearance t between the radially-outer side surface 11f of the receiving member 11 and the inner peripheral surface 4e of the clutch member 4.

The present embodiment includes the radially-outside restricting portion that can restrict radially-outward movement of the receiving member 11 relative to the pressure member 5 and that can maintain the clearance t between the radially-outer side surface 11f of the receiving member 11 and the clutch member 4. Therefore, with the present embodiment, it is possible to prevent the receiving member 11 from sliding over the inner peripheral surface 4e of the clutch member 4, and to improve responsiveness when engaging the clutch and to improve operability by reducing the sliding resistance of the receiving member 11.

Moreover, the radially-outside restricting portion according to the present embodiment is constituted by the radially-outside opening 5f of the attachment hole 5b and can restrict radially-outward movement by making contact with the receiving member 11. Thus, it is possible to restrict the radially-outward movement of the receiving member 11 by using the radially-outside opening 5f of the attachment hole 5b, and to reliably reduce the sliding resistance of the receiving member 11. Furthermore, the receiving member 11 according to the present embodiment has the contact surface 11e conforming to the radially-outside opening 5f of the attachment holes 5b, and the contact surface 11e is capable of conformably making contact with the radially-outside opening 5f. Thus, it is possible to cause the receiving member 11 to stably make contact with the radially-outside opening 5f and to more reliably reduce the sliding resistance of the receiving member 11.

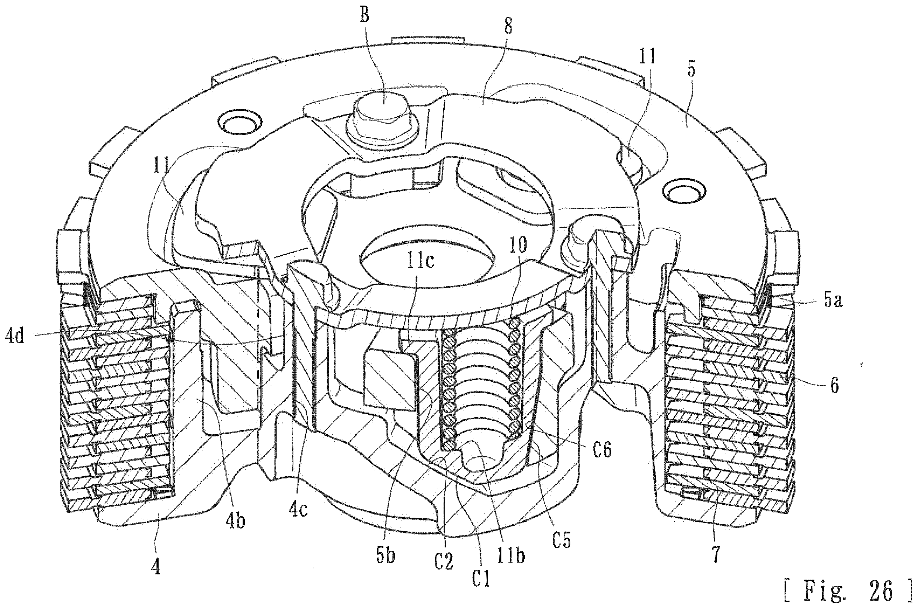

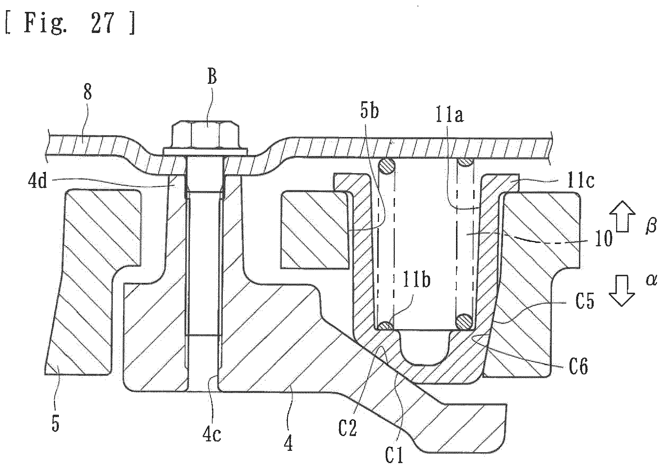

The present invention is not limited to the embodiments described above. For example, as illustrated in Figs. 26 and 27, the present invention may be applied to a power transmission device that does not have the press-contact assisting cam (the third cam surfaces C3 and the fourth cam surfaces C4 in the first and second embodiments). Even in this case, the power transmission device includes the radially-outside restricting portion that can restrict radially-outward movement of the receiving member 11 relative to the pressure member 5 and can maintain the clearance t between the side surface (11d, 11f) of the receiving member 11 and the inner peripheral surface 4e of the clutch member 4. Thus, it is possible to prevent the receiving member 11 from sliding over the inner peripheral surface 4e of the clutch member 4, and it is possible to improve responsiveness when engaging the clutch and to improve operability by reducing the sliding resistance of the receiving member 11.

Moreover, in the present embodiment, a plurality of (three) receiving members 11 are attached to the pressure member 5, and the radially-outside restricting portion restricts radially-outward movement of each of the receiving members 11. However, only one or some selected receiving members 11 may be configured to be restricted by the radially-outside restricting portion. The number of receiving members 11 attached and the shape of each of the receiving members 11 are not limited. The power transmission device according to the present invention can be used as a multiple disc clutch for a motorcycle, an automobile, a three-wheeled or four-wheeled ATV, a general-purpose machine, or the like.

### Industrial Applicability

The present invention is applicable to any power transmission device that has a different outer shape or that has additional functions, as long as the power transmission device has a radially-outside restricting portion that can restrict radially-outward movement of a receiving member relative to a pressure member and can maintain a clearance between a side surface of the receiving member and a clutch member.

### Reference Signs List

- 1: gear (input member)
- 2: clutch housing
- 3: shaft (output member)
- 4: clutch member
- 4a: central hole
- 4b: outer peripheral wall
- 4c: bolt hole
- 4d: boss portion
- 4e: inner peripheral surface
- 5: pressure member
- 5a: flange portion
- 5b: attachment hole
- 5c: through-hole
- 5d: central hole
- 5e: contact portion
- 5f: radially-outside opening
- 6: drive-side clutch plate
- 7: driven-side clutch plate
- 8: fixing member
- 9: push rod
- 10: clutch spring (urging means)
- 11: receiving member
- 11a: recessed portion
- 11b: receiving portion
- 11c: flange portion
- 11d: side surface
- 11e: contact surface
- 11f: radially-outer side surface
- C1: first cam surface
- C2: second cam surface
- C3: third cam surface
- C4: fourth cam surface
- C5: fifth cam surface
- C6: sixth cam surface

## Claims

1. A power transmission device comprising:
a clutch housing (2) that rotates together with rotation of an input member (1) and to which a plurality of drive-side clutch plates (6) are attached;
a clutch member (4) to which a plurality of driven-side clutch plates (7) that are formed alternately with the drive-side clutch plates (6) of the clutch housing are attached and to which an output member (3) is coupled;
a pressure member (5) that is attached to the clutch member (4) and that is capable of pressing the drive-side clutch plates (6) and the driven-side clutch plates (7) against each other or releasing a press-contact force in accordance with movement thereof relative to the clutch member (4) in an axial direction;
urging means (10) that urges the pressure member (5) in a direction such that the drive-side clutch plates and the driven-side clutch plates are pressed against each other;
a receiving member (11) that is constituted by a separate member attached to the pressure member (5), that receives an urging force of the urging means (10) on the pressure member side, and that is capable of transmitting the urging force to the pressure member; and
a back-torque limiting cam that is constituted by a pair of cam surfaces that reduce a press-contact force between the drive-side clutch plates and the driven-side clutch plates if the pressure member and the clutch member rotate relative to each other when a rotation speed of the output member exceeds a rotation speed of the input member, **characterized in that**,
one of the cam surfaces (C1) being formed in the receiving member (11), the other cam surface (C2) being formed in the clutch member (4),
wherein the power transmission device is capable of transmitting or cutting off rotational power input to the input member to the output member by pressing the drive-side clutch plates (6) and the driven-side clutch plates (7) against each other or releasing the press-contact force, and
wherein the power transmission device includes a radially-outside restricting portion (11f) that is capable of restricting radially-outward movement of the receiving member (11) relative to the pressure member (5) and is capable of maintaining a clearance (t) between a side surface of the receiving member and the clutch member.

2. The power transmission device according to Claim 1,
wherein the radially-outside restricting portion (11f) includes a flange portion (11c) formed on an opening side of the receiving member (11), and
a contact portion (11e) that is formed in the pressure member (5) and that is capable of restricting the radially-outward movement of the receiving member (11) by making contact with the flange portion (11c).

3. The power transmission device according to Claim 2, wherein the contact portion is constituted by a wall surface extending in a rotation axis direction of the pressure member (5) and is capable of conformably making contact with a side surface of the flange portion (11c)

4. The power transmission device according to Claim 3, wherein the contact portion has a shape conforming to an outer peripheral shape of the flange portion (11c) in plan view.

5. The power transmission device according to Claim 1, wherein an attachment hole (5b) for attaching the receiving member is formed in the pressure member, and the radially-outside restricting portion is constituted by a radially-outside opening (5f) of the attachment hole and is capable of restricting the radially-outward movement by making contact with the receiving member (11) .

6. The power transmission device according to Claim 5, wherein the receiving member (11) has a contact surface having a shape conforming to the radially-outside opening of the attachment hole, and the contact surface is capable of conformably making contact with the radially-outside opening (5f).

## Patentansprüche

1. Leistungsübertragungsvorrichtung umfassend:
ein Kupplungsgehäuse (2), das sich mit der Drehung eines Antriebselements (1) dreht, und an dem mehrere antriebsseitige Kupplungsscheiben (6) angebracht sind;
ein Kupplungselement (4), an dem mehrere abtriebsseitige Kupplungsscheiben (7), die abwechselnd mit den antriebsseitigen Kupplungsscheiben (6) des Kupplungsgehäuses ausgebildet sind, angebracht sind und mit dem ein Abtriebselement (3) gekoppelt ist;
ein Druckelement (5), das an dem Kupplungselement (4) befestigt ist und das in der Lage ist, die antriebsseitigen Kupplungsscheiben (6) und die abtriebsseitigen Kupplungsscheiben (7) gegeneinander zu drücken oder eine Druckkontaktkraft in Übereinstimmung mit seiner Bewegung relativ zu dem Kupplungselement (4) in einer axialen Richtung löst;
Druckmittel (10), das das Druckelement (5) in eine Richtung presst, so dass die antriebsseitigen Kupplungsscheiben und die abtriebsseitigen Kupplungsscheiben gegeneinander gedrückt werden;
ein Aufnahmeelement (11), das aus einem separaten Element besteht, das an dem Druckelement (5) befestigt ist, das eine Druckkraft des Druckmittels (10) auf der Seite des Druckelements aufnimmt und das in der Lage ist, die Druckkraft auf das Druckelement zu übertragen; und
eine Nocke für die hintere Drehmomentbegrenzung, die aus einem Paar von Nockenflächen besteht, die eine Druckkontaktkraft zwischen den antriebsseitigen Kupplungsscheiben und den abtriebsseitigen Kupplungsscheiben reduzieren, wenn sich das Druckelement und das Kupplungselement relativ zueinander drehen, wenn eine Drehgeschwindigkeit des Abtriebselements eine Drehgeschwindigkeit des Antriebselements übersteigt,
**dadurch gekennzeichnet, dass**
eine der Nockenflächen (C1) in dem Aufnahmeelement (11) und die andere Nockenfläche (C2) in dem Kupplungselement (4) ausgebildet ist,
wobei die Leistungsübertragungsvorrichtung in der Lage ist, die dem Antriebselement zugeführte Drehkraft auf das Abtriebselement zu übertragen oder zu unterbrechen, indem sie die antriebsseitigen Kupplungsscheiben (6) und die abtriebsseitigen Kupplungsscheiben (7) gegeneinander drückt oder die Druckkontaktkraft löst, und
wobei die Leistungsübertragungsvorrichtung einen radial äußeren Begrenzungsabschnitt (11f) aufweist, der in der Lage ist, eine radial äußere Bewegung des Aufnahmeelements (11) relativ zu dem Druckelement (5) zu begrenzen und in der Lage ist, einen Abstand (t) zwischen einer Seitenfläche des Aufnahmeelements und des Kupplungselements aufrechtzuerhalten.

2. Leistungsübertragungsvorrichtung nach Anspruch 1, wobei der radial äußere Begrenzungsabschnitt (11f) einen Flanschabschnitt (11c), der an einer Öffnungsseite des Aufnahmeelements (11) ausgebildet ist, und einen Kontaktabschnitt (11e) aufweist, der in dem Druckelement (5) ausgebildet ist und der in der Lage ist, die radial äußere Bewegung des Aufnahmeelements (11) durch Herstellen eines Kontakts mit dem Flanschabschnitt (11c) zu begrenzen.

3. Leistungsübertragungsvorrichtung nach Anspruch 2, wobei der Kontaktabschnitt durch eine Wandfläche gebildet wird, die sich in Richtung der Drehachse des Druckelements (5) erstreckt und in der Lage ist, mit einer Seitenfläche des Flanschabschnitts (11c) konform Kontakt herzustellen.

4. Leistungsübertragungsvorrichtung nach Anspruch 3, wobei der Kontaktabschnitt eine Form aufweist, die in der Draufsicht einer äußeren Umfangsform des Flanschabschnitts (11c) entspricht.

5. Leistungsübertragungsvorrichtung nach Anspruch 1, wobei ein Befestigungsloch (5b) zum Befestigen des Aufnahmeelements in dem Druckelement ausgebildet ist und der radial äußere Begrenzungsabschnitt durch eine radial äußere Öffnung (5f) des Befestigungslochs gebildet wird und in der Lage ist, die radial äußere Bewegung durch Herstellen von Kontakt mit dem Aufnahmeelement (11) zu begrenzen.

6. Leistungsübertragungsvorrichtung nach Anspruch 5, wobei das Aufnahmeelement (11) eine Kontaktfläche aufweist, die eine an die radial äußere Öffnung des Befestigungslochs angepasste Form hat, und die Kontaktfläche in der Lage ist, mit der radial äußeren Öffnung (5f) konform Kontakt herzustellen.

## Revendications

1. Dispositif de transmission d'énergie, qui comprend :
un carter d'embrayage (2) qui effectue des rotations de manière conjointe avec la rotation d'un élément d'entrée (1) et auquel sont fixés un certain nombre de disques d'embrayage (6) du côté entraînement ;
un élément (4) faisant office d'embrayage auquel sont fixés un certain nombre de disques d'embrayage (7) du côté mené, qui sont réalisés en alternance avec les disques d'embrayage (6) du carter d'embrayage, du côté entraînement, et auquel est couplé un élément de sortie (3) ;
un élément (5) exerçant une pression, qui est fixé à l'élément (4) faisant office d'embrayage, et qui est capable de comprimer les disques d'embrayage (6) du côté entraînement et les disques d'embrayage (7) du côté mené, les uns contre les autres, ou de relâcher une force de contact par pression en conformité avec son mouvement par rapport à l'élément (4) faisant office d'embrayage, dans une direction axiale ;
un moyen de poussée (10) qui pousse l'élément (5) exerçant une pression dans une direction telle que les disques d'embrayage du côté entraînement et les disques d'embrayage du côté mené sont comprimés les uns contre les autres ;
un élément de réception (11) qui est constitué par un élément séparé qui est fixé à l'élément (5) exerçant une pression, qui reçoit une force de poussée du moyen de poussée (10) sur le côté de l'élément exerçant une pression, et qui est capable de transmettre la force de poussée à l'élément exerçant une pression ; et
une came d'un embrayage du type à glissement limité qui est constituée par une paire de surfaces de came qui réduisent une force de contact par pression qui s'exerce entre les disques d'embrayage du côté entraînement et les disques d'embrayage du côté mené dans le cas où l'élément exerçant une pression et l'élément faisant office d'embrayage sont mis en rotation l'un par rapport à l'autre lorsqu'une vitesse de rotation de l'élément de sortie dépasse une vitesse de rotation de l'élément d'entrée ;
**caractérisé en ce que**
une des surfaces de came (C1) est réalisée dans l'élément de réception (11), l'autre surface de came (C2) étant réalisée dans l'élément (4) faisant office d'embrayage ;
dans lequel le dispositif de transmission d'énergie est capable de transmettre à l'élément de sortie une alimentation de rotation à l'élément d'entrée ou de couper ladite alimentation en comprimant les uns contre les autres les disques d'embrayage (6) du côté entraînement et les disques d'embrayage (7) du côté mené ou en relâchant la force de contact par pression ; et
dans lequel le dispositif de transmission d'énergie englobe une portion de restriction (11f) du côté externe en direction radiale, qui est capable de restreindre le mouvement de l'élément de réception (11), qui s'étend vers l'extérieur en direction radiale, par rapport à l'élément (5) exerçant une pression, et qui est capable de maintenir un distance (t) entre une surface latérale de l'élément de réception et l'élément faisant office d'embrayage.

2. Dispositif de transmission d'énergie selon la revendication 1, dans lequel la portion de restriction (11f) du côté externe en direction radiale englobe une portion (11c) sous la forme d'une bride que l'on obtient sur un côté d'ouverture de l'élément de réception (11) et une portion (11e) faisant office de contact que l'on obtient dans l'élément (5) exerçant une pression et qui est capable de restreindre le mouvement de l'élément de réception (11), qui s'étend vers l'extérieur en direction radiale, par l'intermédiaire d'une mise en contact avec la portion (11c) sous la forme d'une bride.

3. Dispositif de transmission d'énergie selon la revendication 2, dans lequel la portion faisant office de contact est constituée par une surface de paroi qui s'étend dans une direction d'axe de rotation de l'élément (5) exerçant une pression et est capable d'entrer en contact par complémentarité de forme avec une surface latérale de la portion (11c) sous la forme d'une bride.

4. Dispositif de transmission d'énergie selon la revendication 3, dans lequel la portion faisant office de contact possède une configuration qui épouse par complémentarité de forme une configuration périphérique externe de la portion (11c) sous la forme d'une bride dans une vue en plan.

5. Dispositif de transmission d'énergie selon la revendication 1, dans lequel on réalise, dans l'élément exerçant une pression, un trou de fixation (5b) qui est destiné à fixer l'élément de réception et la portion de restriction du côté externe en direction radiale est constituée par une ouverture (5f) du trou de fixation, du côté externe en direction radiale, et est capable de restreindre le mouvement qui s'étend vers l'extérieur en direction radiale en entrant en contact avec l'élément de réception (11).

6. Dispositif de transmission d'énergie selon la revendication 5, dans lequel l'élément de réception (11) possède une surface de contact qui possède une configuration qui épouse par complémentarité de forme l'ouverture du trou de fixation, du côté externe en direction radiale, et la surface de contact est capable d'entrer en contact par complémentarité de forme avec l'ouverture (5f) du côté externe en direction radiale.
